# EUROPEAN PATENT SPECIFICATION

(11) **EP 0 375 373 B1**
(45) Date of publication and mention of the grant of the patent: **04.05.1994**
(21) Application number: 89313303.3
(22) Date of filing: 19.12.1989
(51) Int. Cl.: B01D 29/15

(54) **Filter element assembly**
Filteranlage
Dispositif filtrant

(30) Priority: 20.12.1988 GB 8829647
(43) Date of publication of application: 27.06.1990
(73) Proprietor: PALL CORPORATION, Glen Cove, New York 11542 (US)
(72) Inventor: Mills, Steven Lewis, Old Portsmouth Hants. PO1 2TJ (GB); Moran, Kevin Patrick, Portsmouth Hants. PO4 8AJ (GB)
(74) Representative: Knott, Stephen Gilbert

(56) References cited:
- GB-A- 1 075 930
- GB-A- 1 413 497
- GB-A- 1 514 045
- US-A- 2 468 603
- US-A- 3 288 291

## Description

This invention relates to filter element assemblies and to filter units incorporating such assemblies.

For a large variety of uses it has been conventional practice to form a filter unit from a filter material inserted into or removed from a filter housing, which provides for the inlet of material to be filtered and the outlet for the filtrate.

Such filter element assemblies conventionally comprise end caps, one at each end of the filter element. These end caps allow the filter element to be connected to the inlet and the outlet of the housing. Examples of such end caps are shown in GB-A-1162696, GB-A-1595684, EP-A2-0232848 and US-A-3592766. In some cases, the end caps have included perforate flared portions overlying the outer surface of the filter medium, as shown in US-A-4133763.

It is a problem with filter units that some larger particles entering the housing with the material to be filtered will not always pass through the filter medium. Such particles can tend to collect in the housing and can prevent or hinder the insertion of a new filter element assembly into the housing. GB-A-1595584 shows a filter unit provided with a core assembly (rather than an end cap) with a solids collection cup connected to the core. The cup is separated from the filter element on disassembly.

GB-A-1075930 and US-A-3288291 disclose a filter device in which a filter element extends into a fluid reservoir. The end of the element within the reservoir is provided with a closure plate which has a flange fitting over the exterior curved surface of the element. An end plate is also carried at this end of the element and includes a side wall portion extending axially along, but spaced from, the element to form a contaminant collection chamber.

According to a first aspect of the present invention there is provided a filter element assembly incorporating a filter element having two ends and a filter surface extending between said ends and two end caps covering respective said ends, at least one end cap having a first skirt portion thereof extending towards the other end cap and being a close fit over said filter surface, the assembly including a portion outwardly spaced from the said filter surface and providing, with the adjacent filter surface of the filter element, a chamber for the collection of particles in the material being filtered, characterised in that the chamber-forming portion is formed as a second skirt portion on an end cap, the second skirt portion being unitary with the first skirt portion and being outwardly spaced from said first skirt portion, said second skirt portion extending over only a small proportion of the overall length of the filter assembly.

The chamber can act to collect particles which would otherwise collect in the housing and so can make replacement of the filter element easier. The cap is removed with the filter and discarded with the filter.

According to a second aspect of the invention there is provided a filter unit comprising a housing having an inlet for material to be filtered and an outlet for filtrate, a filter element assembly according to the first aspect of the invention being disposed within the housing with one end cap connected to said outlet, an end edge of the second skirt portion of the at least one end cap being disposed adjacent to the housing outlet and being closely adjacent an interior surface of the housing.

In both aspects of the invention, the at least one end cap is preferably bonded permanently to the filter element.

One embodiment of a filter element assembly in accordance with the present invention will now be described, by way of example only, with reference to the accompanying diagrammatic drawings, in which:
Figure 1 is a longitudinal section of a filter housing fitted with a filter element assembly,
Figure 2 is a longitudinal section of the filter element assembly of the kind shown in Figure 1 but having different relative dimensions, part of which is broken away,
Figure 3 is an end elevation of one end cap of the filter element assembly of Figure 2; and
Figure 4 is a cross-section of the filter element assembly of Figures 1 to 3, in a plane containing the longitudinal axis of the assembly, and showing one end cap.

The cylindrical filter housing 10 is of generally conventional form and incorporates an inlet 12 and an outlet 14 and also has a cover 16 with transverse apertures which aid engagement and disengagement in relation to the housing 10. The interior of the housing is of circular cross-section. A flange 17 enables the housing to be mounted on associated equipment. The cover 16 carries a dependant extension 18 which provides a mounting for the filter element assembly 20 and also accommodates a pressure relief valve 21. A pressure drop sensor 19 is mounted in an enlargement of the flange 17.

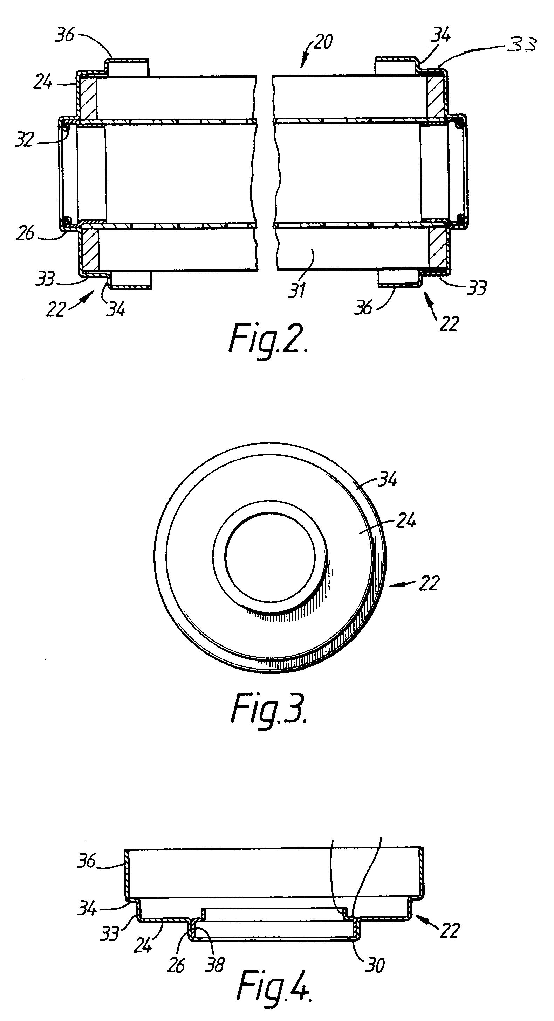

The cylindrical filter element assembly 20 includes a filter element 31 (see Figure 2) of any known filter medium and normally the medium will be pleated, as is conventional. The filter element 31 has a central cylindrical passage and has no protective surface layer so that the medium provides an exposed filter surface at the exterior of the filter element.

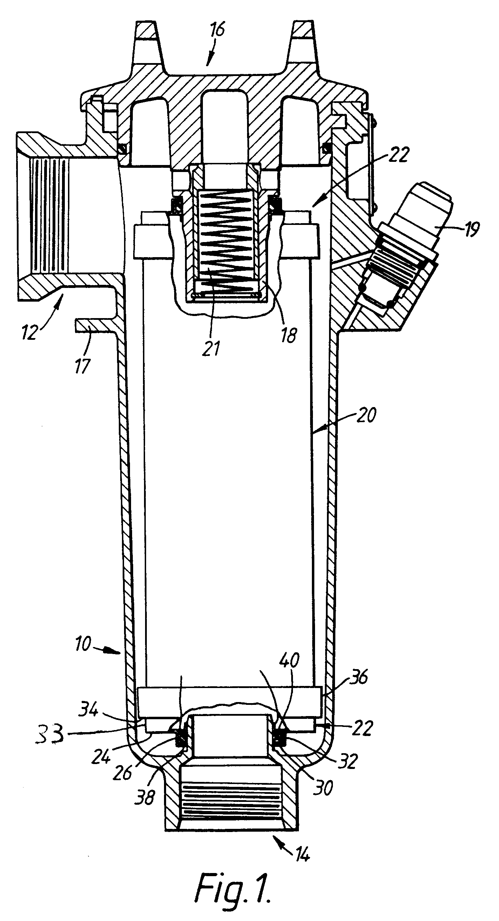

The filter element has mounted thereon two end caps 22 (see Figures 1 and 2) which are identical in the preferred embodiment although this identity is not, of course, essential. The end caps 22 are permanently connected to the filter element by, for example, gluing. Each end cap 22 is generally annular and comprises a base 24 extending, when fitted to the filter element, normal to the longitudinal axis of the generally cylindrical element, and an annular portion 26 extending around the base 24 at a position spaced just outwardly of the inner periphery of the base 24 and extending in a direction away from the filter element.

A further annular portion 33 also extends around the inner periphery of the base 24, but in a direction opposite to the portion 26. This further portion 33 is a close fit within the associated end of the passage 23 in the element 31.

As will be apparent in Figure 1, the portion 26 extending away from the filter medium has at its edge remote from the element 31, an inwardly turned flange 30 which defines, together with the part of the base 24 adjacent the inner periphery of the base 24, an annular inwardly directed channel which accommodates an O-ring or other seal member 32.

The base 24 has, at its outer periphery, a first annular skirt portion 33 which is connected to a second annular skirt portion 36, of greater diameter than the first skirt portion 33, by a radially extending flange 34. The first and second skirt portions 33,36 overlie the element 31 over a relatively small proportion of the overall length of the element 31. The first skirt portion 33 has a shape which substantially corresponds to the shape of the outer surface of the filter element 31 while the second skirt portion 36 forms, with the adjacent surface of the filter element, a chamber for a purpose to be described below. The second skirt portion 36 may flare outwardly by a small angle, say 1^{o} or 2^{o} and is without holes or other apertures.

The end caps 22 described above with reference to the drawings can be made of pressed or stamped sheet metal in which case they will comprise, as seen in Figure 4, two separate parts, the first including the annular portion 26, an outer portion of the base 24, the skirt portions 33,36 and the flange 34 and the second part including an inner annular portion 38 corresponding to the cylindrical portion 26, an inner portion 40 of the base 24 and the further portion 33. The parts are connected together by an interference fit between the annular portion 26 and the corresponding annular portion 38.

If the end caps 22 are to be made of injection moulded plastics material then it is readily possible to make the end caps in a single piece.

The end caps involve very modest additional costs in relation to conventional end caps but nevertheless contribute significantly to the effectiveness of the filter element as a whole. The skirt 36 of the end cap 22 at the inlet end, as shown in Figure 1, provides Protection for the filter element from the erosion or scouring effects of the inlet fluid which will, of course, be full of dirt and abrasive particles.

The other, end cap 22 at the outlet end, has the second skirt portion 36 dimensioned, as can be seen in Figure 1, so that it is a very close fit to the internal surface of the housing (although not a tight fit). All of the liquid to be filtered should pass from the outer periphery of the filter element into the body of the filter element medium and subsequently cleaned liquid should pass through the outlet 14. However, especially if the particles in the liquid to be filtered are relatively heavy, it is quite likely that some of these will sink to the bottom of the filter housing with the result that, if the skirt 36 of the end cap 22 were not present, this heavy particulate matter would accumulate in the bottom of the filter housing with the accumulation eventually being liable to hinder the fitting of a fresh filter element, unless the housing is detached and thoroughly cleaned.

By the provision of the second skirt portion 36 on the outlet end cap 22, which is imperforate, these relatively heavy particles will be collected in the annular chamber defined between the skirt 36 and the element body 31, while the liquid and smaller particles will pass into the filter element itself for filter action as for the remainder of the element. Since the end caps 22 are permanently fixed to the filter element 31, they, and the particles they hold, are removed on removal of the filter element and are replaced on replacement of the filter element 31. Further, the second skirt portion 36 acts to control the flow of the material within the housing.

It will also be noted that, as described above, the end caps 22 carry O-ring seals 32. Thus a fresh O-ring seal is provided with each filter element so eliminating the risk that the seals will not be changed every time the filter element is exchanged.

If the end caps 22 of each end of a filter element assembly are identical costs are kept to a minimum. However, the end caps may differ as between the inlet end and the outlet end of the filter element. The second skirt 36 of the inlet end cap 22 may be a fairly close fit in relation to the outer surface of the element body 31, while the outlet end cap 22 will be as illustrated in the drawings. This modification may be employed where the internal dimensions of the housing dictate such an inlet end cap configuration.

Certain filter media which would otherwise require a protective sleeve over the full length of the element, are protected by the caps 22 described above with reference to the drawings. At the vulnerable inlet end and they eliminate the need for such a sleeve. By the elimination of the protective sleeve, materials costs and assembly costs are saved.

## Claims

1. A filter element assembly incorporating a filter element (31) having two ends and a filter surface extending between said ends and two end caps (22) covering respective said ends, at least one end cap (22) having a first skirt portion (28) thereof extending towards the other end cap (22) and being a close fit over said filter surface, the assembly including a portion (36) outwardly spaced from the said filter surface and providing, with the adjacent filter surface of the filter element, a chamber for the collection of particles in the material being filtered, characterised in that the chamber-forming portion is formed as a second skirt portion (36) on an end cap (22), the second skirt portion (36) being unitary with the first skirt portion (33) and being outwardly spaced from said first skirt portion (33), said second skirt portion (36) extending over only a small proportion of the overall length of the filter assembly.

2. An assembly according to claim 1 characterized in that each end cap (22) includes a base portion (24) which overlies the associated end of the filter medium and a portion (26) connected to the base portion (24), extending away from said end and arranged to fit a part of a filter housing.

3. An assembly according to claim 1 or claim 2 characterized in that each end cap (22) is made from two pressed metal parts (Figure 4).

4. An assembly according to any one of claims 1 to 3 characterized in that each end cap (22) defines a channel open inwardly towards the longitudinal axis of the assembly, which channel accommodates an O-ring (32) or other seal member.

5. An assembly according to any one of claims 1 to 4 characterized in that said filter medium is cylindrical, said second skirt portion (36) being outwardly flared.

6. A filter unit comprising a housing (10) having an inlet (12) for material to be filtered and an outlet (14) for filtrate, a filter element assembly (20) according to any one of claims 1 to 5 being disposed within the housing with one end cap (22) connected to said outlet (14), an end edge of the second skirt portion (36) of the end cap adjacent to the housing outlet being closely adjacent an interior surface of the housing.

7. A filter unit according to claim 6 characterized in that the interior of said housing and said filter element are of circular cross-section.

## Patentansprüche

1. Filterelementanordnung, die ein Filterelement (31) einschließt, das zwei Enden und eine Filteroberfläche hat, die sich zwischen den Enden und zwei Endkappen (22) erstreckt, die die jeweiligen Enden bedecken, wobei mindestens eine Endkappe (22) einen sich hiervon zu den anderen Endkappen (22) hin erstreckenden ersten Randabschnitt (28) hat und die eine dicht schließende Passung über der Filteroberfläche ist, wobei die Anordnung einen Abschnitt (36) aufweist, der nach außen mit einem Abstand von der Filteroberfläche angeordnet ist, und mit der angrenzenden Filteroberfläche des Filterelements eine Kammer für das Sammeln von Partikeln in dem gefilterten Material vorsieht, **dadurch gekennzeichnet**, daß der kammer-bildende Abschnitt als ein zweiter Randabschnitt (36) auf einer Endkappe (22) gebildet ist, wobei der zweite Randabschnitt (36) mit dem ersten Randabschnitt (33) eine Einheit bildet und auswärts mit einem Abstand von dem ersten Randabschnitt (33) angeordnet ist, wobei der zweite Randabschnitt (36) sich nur über einen kleinen Teil der Gesamtlänge der Filteranordnung erstreckt.

2. Anordnung nach Anspruch 1, **dadurch gekennzeichnet**, daß jede Endkappe (22) einen Basisabschnitt (24) aufweist, der auf dem zugeordneten Ende des Filtermediums und einem Abschnitt (26) liegt, der mit dem Basisabschnitt (24) verbunden ist, der sich von dem Ende weg erstreckt, und angeordnet ist, damit ein Teil eines Filtergehäuses daran paßt.

3. Anordnung nach Anspruch 1 oder 2, **dadurch gekennzeichnet**, daß jede Endkappe (22) aus zwei Metall-Preßteilen hergestellt ist (Figur 4).

4. Anordnung nach einem der Ansprüche 1 bis 3, **dadurch gekennzeichnet**, daß jede Endkappe (22) einen nach innen in Richtung der Längsachse der Anordnung offenen Kanal definiert, welcher Kanal einen O-Ring (32) oder ein anderes Dichtungsteil aufnimmt.

5. Anordnung nach einem der Ansprüche 1 bis 4, **dadurch gekennzeichnet**, daß das Filtermedium zylindrisch ist, wobei der zweite Randabschnitt (36) nach außen hin erweitert ist.

6. Filtereinheit, die ein Gehäuse (10) aufweist, das einen Einlaß (12) für zu filterendes Material und einen Auslaß (14) für ein Filtrat hat, wobei eine Filterelementanordnung (20) nach einem der Ansprüche 1 bis 5 innerhalb des Gehäuses so angeordnet ist, daß eine Endkappe (22) mit dem Auslaß (14) verbunden ist und wobei eine Endkante des zweiten Randabschnitts (36) der dem Gehäuseauslaß benachbarten Endkappe an einer inneren Oberfläche des Gehäuses eng benachbart ist.

7. Filtereinheit nach Anspruch 6, **dadurch gekennzeichnet**, daß das Innere des Gehäuses und das Filterelement einen kreisförmigen Querschnitt haben.

## Revendications

1. Ensemble d'élément filtrant comprenant un élément filtrant (31) ayant deux extrémités et une surface filtrante s'étendant entre lesdites extrémités, et deux chapeaux d'extrémité (22) qui coiffent respectivement lesdites extrémités, au moins un chapeau d'extrémité (22) ayant sa première portion jupe (28) qui s'étend vers l'autre chapeau d'extrémité (22) et qui s'ajuste étroitement sur ladite surface filtrante, l'ensemble comprenant une portion (36) espacée de ladite surface filtrante vers l'extérieur et formant, avec la surface filtrante adjacente de l'élément filtrant, une chambre destinée à collecter des particules contenues dans la matière à filtrer, caractérisé en ce que la portion formant chambre revêt la forme d'une deuxième portion jupe (36) du chapeau d'extrémité (22), la deuxième portion jupe (36) étant d'un seul tenant avec la première portion jupe (33) et étant espacée de ladite première portion jupe (33) vers l'extérieur, ladite deuxième portion jupe (36) s'étendant seulement sur une petite proportion de la longueur hors tout de l'ensemble de filtre.

2. Ensemble selon la revendication 1, caractérisé en ce que chaque chapeau d'extrémité (22) comprend une portion de base (24) qui recouvre l'extrémité correspondante du milieu filtrant et une portion (26) raccordée à la portion de base (24), qui s'étend dans le sens qui s'éloigne de ladite extrémité et est agencée pour s'ajuster sur une partie du corps de filtre.

3. Ensemble selon la revendication 1 ou la revendication 2, caractérisé en ce que chaque chapeau d'extrémité (22) est fait de deux pièces de métal embouti (figure 4).

4. Ensemble selon une quelconque des revendications 1 à 3, caractérisé en ce que chaque chapeau d'extrémité (22) définit une gorge s'ouvrant intérieurement vers l'axe longitudinal de l'ensemble, laquelle gorge reçoit une bague torique (32) ou un autre élément d'étanchéité.

5. Ensemble selon une quelconque des revendications 1 à 4, caractérisé en ce que ledit milieu filtrant est cylindrique et ladite deuxième portion jupe (36) est évasée vers l'extérieur.

6. Unité filtre comprenant un corps (10) muni d'une entrée (12) pour la matière à filtrer et d'une sortie (14) pour le filtrat, un ensemble d'élément filtrant (20) selon une quelconque des revendications 1 à 5 étant disposé dans le corps, avec un premier chapeau d'extrémité (22) raccordé à ladite sortie (14), un bord d'extrémité de ladite deuxième portion jupe (36) du chapeau d'extrémité adjacent à la sortie du corps étant étroitement adjacent à une surface interne du corps.

7. Unité filtre selon la revendication 6, caractérisée en ce que le volume intérieur dudit corps et ledit élément filtrant sont de section circulaire.
